(19)

Europäisches
Patentamt
European
Patent Office
Office européen
des brevets

(11) **EP 1 950 259 A1**

(12) **EUROPEAN PATENT APPLICATION**

(43) Date of publication:
**30.07.2008  Bulletin 2008/31**

(51) Int Cl.:
*C09D 11/00* $^{(2006.01)}$

(21) Application number: **07101083.9**

(22) Date of filing: **24.01.2007**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK RS**

(71) Applicant: **Océ-Technologies B.V.
5914 CC  Venlo (NL)**

(72) Inventors:
• **Van der Schuur, Jan M.
5911 AC Venlo (NL)**
• **Wetjens, Peter M.A.
5975 TE Sevenum (NL)**

(74) Representative: **Janssen, Paulus J. P. et al
Océ-Technologies B.V.
Corporate Patents,
P.O. Box 101
5900 MA Venlo (NL)**

(54) **A meltable ink for an inkjet printer and a method of selecting such an ink**

(57)    The invention relates to a meltable ink which is solid at room temperature and liquid at a higher temperature, which ink is suitable for use in an indirect printing process, in which printing process the ink is provided, by the use of an inkjet printhead, in the form of individual ink drops to a transfer element, whereafter the ink is transferred to a receiving material by bringing the transfer element into contact with said receiving material under pressure, said ink comprising an amorphous binder and at least 20 mass percent, based on the total weight of the ink, of a crystalline diluent such that the ink is pressure-transferable at a temperature between a bottom limit and a top limit, the ink having a deformation energy of less than $20 \times 10^5$ Pa.s at a temperature equal to the top limit, wherein the square of the difference in solubility parameters of the binder and the diluent is more than 20 $J/cm^3$.

FIG.1

EP 1 950 259 A1

**Description**

The invention relates to a meltable ink which is solid at room temperature and liquid at a higher temperature, which ink is suitable for use in an indirect printing process, in which printing process the ink is provided, by the use of an inkjet printhead, in the form of individual ink drops to a transfer element, whereafter the ink is transferred to a receiving material by bringing the transfer element into contact with said receiving material under pressure, said ink comprising an amorphous binder and at least 20 mass percent, based on the total weight of the ink, of a crystalline diluent such that the ink is pressure-transferable at a temperature between a bottom limit and a top limit, the ink having a deformation energy of less than $20 \times 10^5$ Pa.s at a temperature equal to the top limit. The invention also relates to a method of selecting a meltable ink for use in such a printing process and a printing process using such a meltable, pressure-transferable ink.

A meltable ink (also referred to as a hot melt ink) of this kind is known from US 6 923 853. The ink is printed indirectly, i.e. via an intermediate transfer element, on a receiving material, for example a sheet of paper or a plastic overhead sheet. For this purpose the temperature of the ink is raised so that it is liquified, whereafter the liquid ink is transferred imagewise by means of an inkjet printhead on to a transfer surface applied to the transfer element, for example a thin layer of silicone oil applied to a metal roller. The temperature of the transfer element is lower than the melting temperature of the ink but higher than room temperature. As soon as the ink is transferred to the transfer element, it will cool and assume a more or less solid consistency. Because of the small thermal capacity of an individual ink drop, it often cools very rapidly so that its temperature is practically immediately equal - at least for an appreciable part - to the temperature of the transfer element. The ink is of a composition such that under the conditions indicated hereinbefore, and particularly at the temperature of the transfer element, it is malleable and has specific visco-elastic properties which make it possible for the ink to be pressure-transferable, i.e. under pressure and in a certain temperature range it is sufficiently deformable to fuse on a receiving material but also has sufficient cohesion not to split during the transfer (cohesive failure). At a temperature higher than the top limit, the ink is insufficiently cohesive and will split during the transfer process. As a result some of the ink will remain on the transfer element, and this has an adverse effect on print quality. In addition, the residual ink must be removed from the transfer element in order to avoid ghost images on a following receiving material. At a temperature below the bottom limit, the ink has too high a compressive yield stress to fuse completely on the receiving material. In order to print the ink on a receiving material, the latter is brought into contact with the transfer element in a transfer nip, where the pressure is greater than the compressive yield stress of the ink in compression. As a result, the malleable ink transfers from the liquid transfer surface to the receiving material. As a result of this indirect printing process, the individual ink drops are flat, well defined and beautifully round independently of the receiving material used. In particular, this printing technique is suitable for printing transparent films because the light scatter by each individual drop is minimised due to the flattening of the ink drops. An additional advantage of the fusing is that there is less ink required per unit of area. A print quality of this kind cannot be obtained with a direct printing process, i.e. a printing process in which ink drops are applied to a receiving material directly by means of a printhead. The known inks all have a deformation energy less than $20 \times 10^5$ Pa.s. It has been found that such inks transfer relatively easily under pressure. These inks offer the possibility of choice of a rubberised roller or even a rubber belt as transfer element. Rubber has the advantage that a very even transfer nip forms, to the benefit of the print quality. A rubber intermediate is also better able to follow an uneven surface of the receiving material. This benefits the uniformity of an image printed on a receiving material. Rubber also has the advantage of double speed duplex printing of a receiving material in one nip, for example as known from US 6 097 921. Although relatively high printing speeds can be obtained with the known inks, applicant recognised that the transfer efficiency drops significantly at very high printing speeds. For example, at a printing speed above 70 (A4) pages per minute, the transfer efficiency may drop from 98 percent to 92%. Such decrease in transfer efficiency is an important disadvantage when pursuing an economically attractive printing process.

It is an object of the present invention to overcome or at least mitigate the disadvantages of the known pressure-transferable inks. To this end an ink according to the preamble has been devised, characterised in that the square of the difference in solubility parameters of the binder and the diluent is more than 20 J/cm$^3$.

Applicant found that this way a high printing speed can be obtained while still having a very high transfer efficiency. The reason for this surprising effect is not 100% clear, but it is believed that by combining a binder and diluent that are relatively incompatible (hence the difference in solubility parameters) an ink can be provided that has a higher elongation strength and thus, is more resistant against splitting. Preferably, the square of the difference in solubility parameters of the binder and the diluent is between 35 and 100 J/cm$^3$. This way, it appears that not only the inks are relatively resistant against splitting, but also, are very easily deformed, even under light pressure. Therefore, in this embodiment high spreading factors of the inks drops on the ultimate receiving medium can be achieved.

In an embodiment the glass transition temperature of the binder is below 30°C and the crystalline diluent is present in an amount between 40 and 60 mass percent, based on the weight of the ink. In this embodiment, inks can be provided which leads to prints that can resist fairly high mechanical impact such as scratching and folding, but still do not feel "waxy" which is common for hot melt inks. The glass transition temperature as meant herein can be determined with a thermal method as described in "Mechanical Properties and Testing of Polymers, An A-Z Reference" edited by G.M. Swallone, published by Kluwer Academic Publishers, Dordrecht, The Netherlands, 1999, page 110, paragraph "Determination of the glass transition" under b). In this case one should chose a heating cycle at a speed of 20°C/min. The glass transition (noticeable as a second order transition) is determined in the so-called second run to rule out history-effects in the material. It is noted that the same method can be used to determine whether a diluent can be regarded as being "crystalline". When a first order transition is found when subjecting a diluent to the same thermal method, then the diluent can be regarded as crystalline in the sense of the present patent.

The invention also pertains to a method of selecting a meltable ink which is solid at room temperature, suitable for use in an indirect printing process, in which printing process the ink is provided, by the use of an inkjet printhead, to a transfer element, whereafter the ink is transferred under pressure from the transfer element to a receiving material, which ink comprises an amorphous binder and at least 20 mass percent, based on the total weight of the ink, of a crystalline diluent such that said ink is pressure-transferable at a temperature between a bottom limit and a top limit, the method comprising determining whether the ink is pressure-transferable, and if yes, determining the top limit, determining whether a deformation energy of the ink at the said top limit is less than $20 \times 10^5$ Pa.s, and if yes, determining the square of the difference in solubility parameters of the binder and the diluent, and selecting the ink if the difference is more than $20$ J/cm$^3$, preferably between 35 and 100 J/cm$^3$. The invention also pertains to the use of the ink as described here-in before.

The invention will now be explained with reference to the following examples.

Example 1    Description of an indirect inkjet printing process.
Example 2    Methods of determining whether an ink is pressure-transferable.
Example 3.    Method of determining the top limit at which an ink is pressure-transferable.
Example 4    Method of determining whether an ink has a reversible melt and solidification behaviour.
Example 5    Method of determining the deformation energy in Pa.s.
Example 6    Another method of determining the deformation energy in Pa.s.
Example 7    Pressure-transferable inks.
Example 8    Maximum elongation strength of pressure-transferable inks.

Fig. 1.    Diagram showing an indirect inkjet printing process.
Fig. 2.    Thermogram of an ink having a reversible melt and solidification behaviour.
Fig. 3.    Thermogram of an ink having a non-reversible melt and solidification behaviour.
Fig. 4.    Stress against time of an ink measured in accordance with Example 5.
Fig. 5.    Bottom plate and top plate for the measurement in accordance with example 6.

*Example 1*

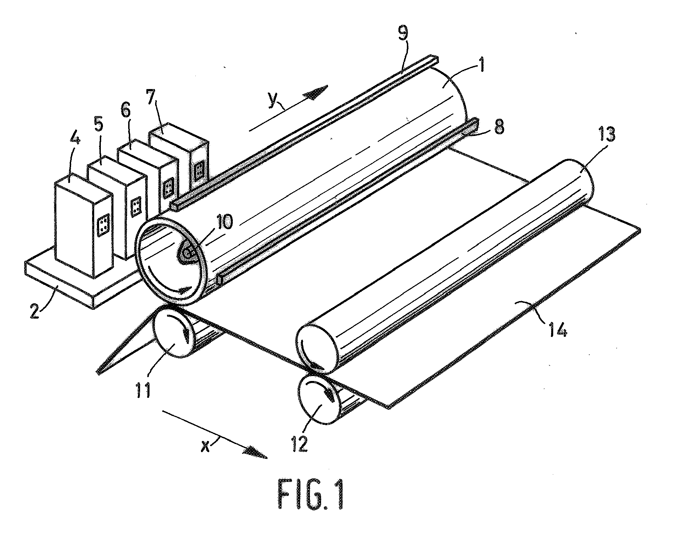

Fig. 1 diagrammatically shows the most important parts of an indirect inkjet method as known from the prior art. The transfer element 1 is disposed centrally in this process and in this case is a hollow aluminium roller. This roller is kept at an elevated temperature by means of a radiator 10 which selectively heats a specific area of the roller. The temperature is kept constant with a margin of a number of degrees by means of a temperature control system (not shown), in such manner that the temperature remains within the bottom limit and the top limit at which the ink is pressure-transferable. The transfer element is provided with a feed element 9 disposed at a distance and serving to provide the surface of the roller with a layer of silicone oil. An image is printed on this layer, which serves as a sacrifice layer, by means of a number of printheads (4, 5, 6 and 7, one for each of the colours cyan, magenta, yellow and black) disposed on a carriage 2. This can be carried out in various ways, for example known from the prior art, and does not form part of this invention. In a typical embodiment, the carriage is moved in the indicated direction Y along the surface of the transfer element and ink is jetted from each of the printheads in the direction of the transfer element. As soon as a strip has been printed on the transfer element in this way, the element is rotated one increment further and the following strip is printed by moving the carriage back, i.e. in the opposite direction to the indicated direction Y. In this way, an entire image can be built up on the transfer element. As soon as the image is ready, a transfer nip is formed by bringing companion roller 11 into contact with transfer element 1 at a specific pressure. The receiving material 14, more particularly a sheet of paper, is then fed through the transfer nip in the direction X by rotating the transfer element and the companion roller in the indicated directions. In these conditions, the image is transferred from the transfer element to the receiving material. After this transfer, any residual image still present on the transfer element is removed, together with the remaining silicone oil, from the surface by the use of cleaning element 8. The printed receiving material is fed through an after-fusing station consisting of the heated rollers 12 and 13 rotating in the indicated directions. This step, in which both heat and pressure are applied, results in good adhesion between the ink and the receiving material.

*Example 2*

It is not possible to predict beforehand whether a specific meltable ink is pressure-transferable. The literature discloses analytical methods to determine whether a specific ink is pressure-transferable, for example US 5 372 852 and the Journal of Imaging Science and Technology, Vol. 40, No. 5, Sept/Oct. 1996, pages 386 to 389. However, it is also possible to subject a specific ink to a practical test. For this purpose, it is possible to use a printing system applying an indirect inkjet process as the method. In this example, a generally available printer is used, namely the Phaser 840 Xerox printer. The ink concerned is loaded in the inkjet printhead of this printer and then printing is carried out. It is also possible to use a different printhead to apply the ink to the transfer element, for example a printhead specially developed to use the ink under test. In principle, any method of applying a thin layer of ink (typically 10 to 100 $\mu$m) to the transfer element can be used.

To determine the pressure-transferability, the ink must be transferred at different temperatures from the transfer element to a receiving material. In a first measurement, the transfer element is set to a temperature far above the melting temperature of the ink. Typically, hot melt inks melt at 40 - 80°C, i.e. an initial temperature of 100°C will normally be sufficient. It is then necessary to determine what the transfer yield is in the case of a single transfer (single contact between each ink drop on the transfer element and the receiving material), see Example 3 for the determination of this yield. If the ink is not pressure-transferable at this temperature, there will in fact be a stamping process with a low transfer yield, for Example 5 to 10%. The temperature of the transfer element must then be lowered, for example by 5°C. The transfer yield will then be determined afresh. The temperature of the transfer element can then again be lowered by 5°C to make another print and determine the transfer yield. In this way, the entire temperature area up to room temperature can be investigated. If there is a temperature area where the transfer yield is higher than 90%, then the ink is said to be pressure-transferable.

*Example 3*

This Example indicates how the transfer yield can be determined at a specific temperature and, if there is a transfer working range, what the top and bottom limits of such range are.
An explanation will first be given as to how the transfer yield can be determined at a specific temperature of the transfer element. The transfer yield is defined as the optical density of a printed image in the case of a single transfer (i.e. the receiving material has been in contact with the image on the transfer element only once), divided by the optical density in the case of a 100% transfer:

$$\eta_T = (OD)_{T,1} / (OD)_{100\%} \qquad (1)$$

where $\eta_T$ is the transfer yield at a temperature T of the transfer element, $(OD)_{T,1}$ is the optical density of a single transfer at a temperature T of the transfer element and $(OD)_{100\%}$ is the optical density in the case of a 100% transfer. $(OD)_{T,1}$ is measured with a Gretag densitometer (Gretag D183 OD-meter) by measuring the optical density of the image as transferred to a receiving material at a temperature T of the transfer element. $(OD)_{100\%}$ is a theoretical value which for most inks will not be achieved in a single transfer at a specific T. However, this value can also be determined if the transfer is not complete, for example 20% in one step. In that case, a residual image of 80% will remain on the transfer element. By carrying out a subsequent transfer with this transfer element, part of the ink will again be transferred to a new sheet of receiving material introduced. For this purpose it is necessary for the residual image not to be removed from the transfer element after the first transfer step. For this purpose, the cleaners and the like must be temporarily rendered inoperative. By carrying out transfer so often that no more ink is found on the transfer element, the image as was initially printed on the transfer element will be transferred in a number of steps (1, 2, 3 ... n) to the same number of sheets of receiving material (sheet 1, sheet 2, sheet 3, ... sheet n). By adding the optical densities of each of the sheets 1 to n the value for $(OD)_{100\%}$ is obtained.

$$(OD)_{100\%} = (OD)_1 + (OD)_2 + (OD)_3 + \ldots\ldots + (OD)_n \qquad (2)$$

In principle, the temperature at which the transfer element $(OD)_{100\%}$ is determined can be selected freely, but the determination is more accurate with the smaller the number of sheets required to achieve 100% transfer. Thus $(OD)_{100\%}$ is preferably determined in the temperature range in which the ink is pressure-transferable. Preferably again,

$(OD)_{100\%}$ is determined at the same temperature as the temperature at which the transfer yield $\eta_T$ is determined.

By combining formula (1) and (2) the transfer yield can be determined at any arbitrary temperature T of the transfer element:

$$\eta_T = (OD)_{T,1}/((OD)_1 + (OD)_2 + (OD)_3 + \ldots\ldots + (OD)_n) \qquad (3)$$

In order to determine whether there is a working transfer area or, in other words, whether the ink is pressure-transferable, the method according to Example 2 can be used. Thus it is possible to determine roughly whether there is a working transfer area and if so where the top and bottom limits are situated approximately. To determine this accurately, the transfer yield must be re-determined around the roughly determined limits but now in steps of 1°C in the temperature of the transfer element. By plotting a curve (transfer yield against temperature) it is then possible to determine the top and bottom limits accurately. The top limit is the temperature of the transfer element at which the transfer yield is just 90%. Above this there will be a more cohesive breakage of an ink drop for transfer and the yield will drop and in most cases reach a value of some 5%. The bottom limit is the temperature at which the yield is just 90%. Below this, the ink will not be able to deform sufficiently for sufficient transfer. The lower the temperature, the more the ink will assume a rigid consistency and finally hardly transfer any more.

**Example 4**

The deformation energy can be determined in accordance with one of the specifications as indicated in Examples 5 and 6. The specifications differ in the method in which the sample of the ink for measurement is brought to the measuring temperature. The specification as indicated under Example 5 is relatively simple. In this case the sample is heated from the solid state (room temperature) to the measuring temperature. This simple determination, however, can only be used if the state that the ink reaches by heating from the solid state to the measuring temperature is equal to the state achieved if the ink is cooled from the melted state to said temperature (this being the practical situation during printing). If this is not the case, the specification according to Example 6 must be used, in which the sample, just as in practical printing, is cooled from the melt to the measuring temperature. Moreover, the specification according to Example 6 can always be used.

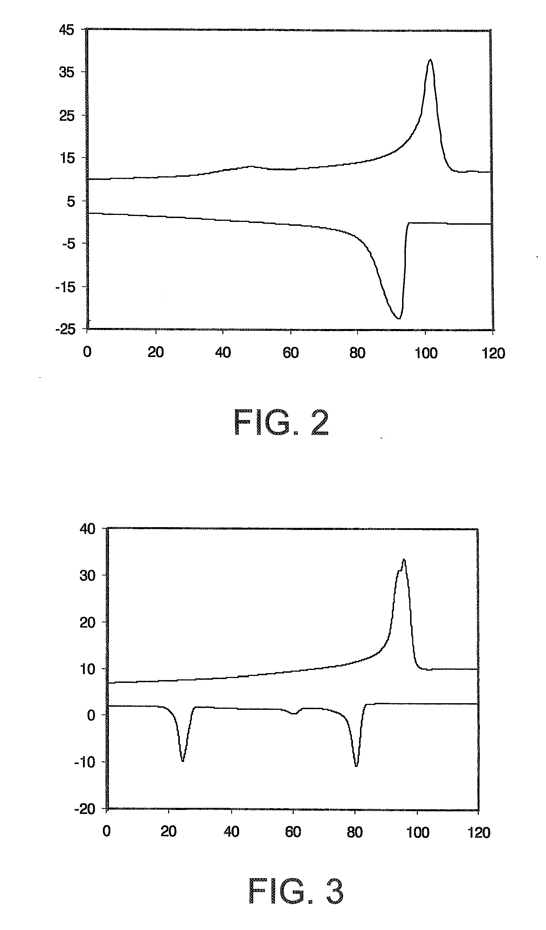

Using a differential scanning calorimeter, for example the Perkin Elmer DSC-7, it is often possible to determine, for an ink which is of simple composition (i.e. consists of a limited number of meltable carrier materials) whether such ink will, on heating from the solid state to the measuring temperature, achieve the same state as when cooling from the melt to the same measuring temperature. For this DSC analysis, approximately 6 mg of ink is weighed out in a 50 $\mu$l aluminium 2 bar capsule, whereafter the capsule is placed in the DSC. A measuring program is then applied, in which the ink is first kept at -50°C for 5 minutes, and is then heated at a rate of 20°C/min to at least 20°C above the melting temperature of the ink. The ink is then kept at this highest temperature for 2 minutes, whereafter it is cooled at a rate of 20°C/min to -50°C. The ink is then kept at -50° for 5 minutes, whereafter the ink is re-heated to at least 20°C above its melting point at a rate of 20°C/min. The first heating run is often used in order to determine the thermal history of the ink. The second heating run is used for the determination according to this Example. An example of a thermogram of an ink which reaches the same state during the heating of said ink from the solid state to 70°C (the measuring temperature in this case) and the cooling of said ink from the melted state to 70°C is given in Fig. 2. The measured heat flux is plotted on the y-axis in milliwatts (mW), and on the x-axis is plotted the temperature in degrees Celsius (°C). The ink in question has as its main constituents (meltable carrier materials) an amorphous binder (50%) and a crystalline diluent (50%). It will be seen that during the heating run (top curve) the ink in question has a melting peak at about 102°C. This means that the crystalline diluent is in the crystalline form at the measuring temperature (assuming this to be 70°C). On cooling from the melt (bottom curve) the ink has a solidification peak at approximately 92°C. This means that in this case, the crystalline diluent is also in the crystalline form at 70°C. Thus the deformation energy of this ink can be measured both in the solid state (Example 5) and the liquid state (Example 6).

Fig. 3 (same axis distribution as in Fig. 2) shows a comparable thermogram but of an ink which contains as meltable carrier materials an amorphous binder (25%) and two crystalline diluents (each 37.5%). On heating from the solid state the ink has one (compound) melting peak at about 95°C. This means that the two crystalline diluents are crystallised at the measuring temperature (e.g. 70°C). On cooling from the melt it will be seen that one of the two crystalline diluents crystallises at approximately 80°C while the other does not crystallise until 25°C. This means that at 70°C the latter diluent is still melted. This state differs considerably from the state achieved on heating up. Consequently, in this case the measurement according to Example 5 is not suitable for determining the deformation energy.

*Example 5*

The term "deformation energy" has been used for this invention. In actual fact, "energy" on itself would not be the correct technical term, because the "deformation energy" is not given in Joules, but in Pa.s (Pascal second). This unit represents the quantity of absorbed energy per unit volume of ink multiplied by the time required to deform the ink (Pa.s is equal to $J/m^3 \times s$). This value is therefore dependent on the method used for measuring. However, by always performing the measurement in the same way it is a good index of the actual energy required to deform the ink, called "deformation energy" in this patent.
If an ink reaches the same state from heating or cooling to measuring temperature (as explained under Example 4), the deformation energy at the top limit can be determined in simple manner by the use of a Rheometer, for example the RSA II (Rheometrics).

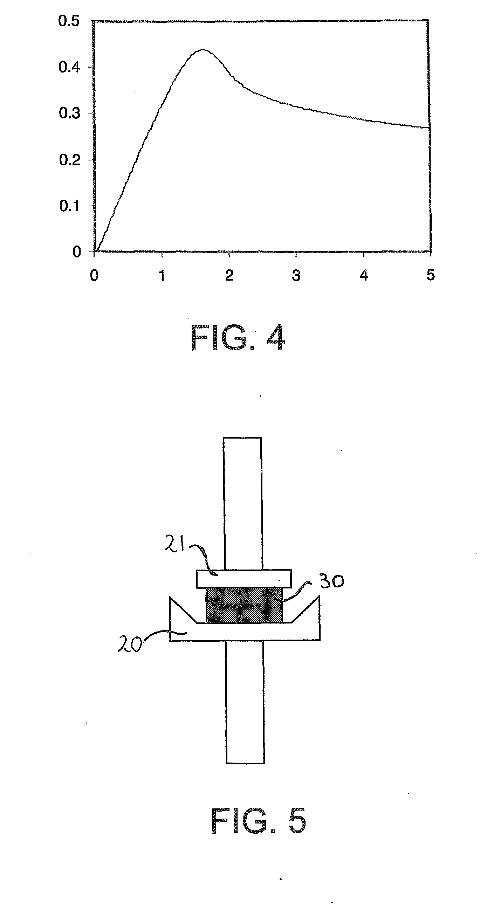

For this purpose, a solid ink film is first made with a thickness of about 2.5 mm. For this purpose, a quantity of ink is melted and poured in a liquid state over a silicone rubber surface with an upright edge so that an ink film forms with a thickness of about 2.5 mm. The ink is then allowed to solidify. A pellet having a cross-section of 4.15 mm is then punched out of the solidified film with a corkscrew. This pellet is transferred to between the two flat plates of the rheometer, which plates have a diameter of about 1 cm. On both sides the plates are brought into contact with the pellet (it is important that the two surfaces of the pellet are as parallel as possible to the rheometer plates). The entire rig, or at least the plates including the pellet, is heated by means of an oven to the top temperature at which the ink is pressure-transferable. The oven and the plates have already been brought to the required temperature under stable conditions before the sample is placed between the plates. As soon as the top temperature has been reached, it is maintained for at least 15 minutes in order to stabilise the temperature of the rig. The pellet is then compressed between the plates at a rate of 4% per second until there is at least a deformation of 20%. During the deformation, the force is measured which is required to apply the deformation. The required stress can be calculated from this force (= force divided by the area of the sample). The curve showing this stress against the time can be used to determine the deformation energy. A curve of this kind is shown in Fig. 4, where the applied stress in MPa (1 06Pa) has been plotted on the y-axis against the time in seconds on the x-axis. The deformation energy associated with a 20% deformation, which is reached after 5 seconds in this measurement, is the area beneath the curve. The reproducibility of this measurement depends on a number of factors, the most important being the sample preparation. If a pellet is not homogeneous or if the two surfaces of the pellet are not plane-parallel, this will result in deviations in the measured deformation energy with respect to the actual value. A-systematic deviations can be eliminated by performing the measurement frequently and averaging the measured values. In this way, an accurate determination can be carried out.

*Example 6*

This example describes a measurement for measuring the deformation energy of an ink, said measuring being applicable to any type of ink. In this measurement, the ink is cooled from the liquid state, at a temperature equal for example to the jetting temperature, to a temperature equal to the top limit at which the ink is pressure-transferable (this situation corresponds to the practical printing situation in which an ink drop is also transferred from a melted state to a transfer element in order to assume the lower temperature of that element there). At this temperature the ink is stabilised until - as in the case of the stabilisation described in Example 5 - both the ink and the apparatus are in equilibrium. Before an ink is exposed to this measurement, it may be necessary to check, by means of a DSC measurement, whether an ink cooled in this way and kept at the top limit temperature for the time required to carry out the measurement with the RSA (some 20 minutes in all) remains stable. If an ink were to partially crystallise, for example, in the said time interval, the measurement on the RSA would not be representative of practice in which the ink, after cooling on the transfer element, is transferred practically directly to the receiving material and hence has no chance to crystallise at the top limit. In such a case, the RSA measurement must be accelerated and may at most occupy the time in which the ink remains stable. This can be optimised, for example, by the temperature stabilisation.

To enable the ink to be measured from the liquid state, a bottom plate has been developed for the RSA and is shown diagrammatically in Fig. 5. Like the top plate, this round bottom plate has a flat part with a diameter of 5.0 mm but an obliquely sloping edge so that liquid ink can be kept on the bottom plate. The determination starts by weighing a quantity of ink such that said ink in the melted state occupies a volume of about 20 mm³. This ink is transferred to the bottom plate 20 of the RSA. The ink is then melted at 120°C, so that it assumes a drop form (not shown). The top plate 21, which is also at a temperature of 120°C, is then brought above the bottom plate to a height of 1 mm, the top plate being situated exactly above the flat part of the bottom plate. As a result, the ink 30 will form a cylindrical column between the two plates as shown in Fig. 5. If this column does not form automatically, the top plate can first be brought closer to the bottom plate, for example to a distance of 0.5 mm, until contact is made with the liquid ink, whereafter the distance is again increased to 1 mm. The ink is then cooled in about three steps to the measuring temperature (i.e. the top limit at which the ink is pressure-transferable). After each step, the ink is stabilised for about 5 minutes at the relevant temperature. In order to prevent stress in the ink as a result of shrinkage of the ink and shrinkage of the top and bottom plates, the stress is automatically kept at zero (the distance between the plates being reduced for this purpose). As soon as the measuring temperature is reached, and the rig is sufficiently stabilised, a situation has occurred which corresponds to the practical situation, i.e. a drop of liquid ink which cools from a high temperature to the top limit. The actual measurement can then start. For this purpose, the cylindrical ink column is compressed at a rate of 4% per second until a 20% deformation is reached. The deformation energy for 20% deformation can be readily derived from this as shown in Example 5. With the RSA measurements as described in Examples 5 and 6 it is possible to measure deformation energies up to $25 \times 10^5$ Pa.s. The inks known from the prior art, however, often have a deformation energy outside that range. In order to enable the deformation therefore also to be determined, use must made of a less sensitive apparatus, for example a dynamic tension bench such as the MTS 831 Elastomer Test System (MTS Systems Corporation). In this apparatus, in a comparable manner to that indicated in the Examples 5 and 6 but with ink pellets of larger dimensions, typically 9.5 mm cross-section and 8 mm height, it is possible to apply deformations at an elevated temperature, from which it is possible to determine from the measured stress required the deformation energy in Pa.s for 20% deformation of the pellet. The spread in this measurement is relatively small for deformation energies above the $25 \times 10^5$ Pa.s, and depends inter alia again on the plane-parallel nature of the top and bottom of the ink pellet.

*Example 7*

Table 1 shows a number of pressure-transferable inks, i.e. the meltable fraction, or carrier fraction of the inks is given. Each of the inks has a deformation energy less than $20 \times 10^5$ Pa.s (at their respective top limit temperature). Each of the inks 1 to 12 is a blend of 50 mass percent of an amorphous binder (first substance in second column of table 1) and 50 mass percent of a crystalline diluent (second substance in second column of table 1). In the third column the figure for the square of the difference in the solubility parameters between the binder and the diluent is given. This figure is calculated by using the commonly known method known as the "Van Krevelen method" (see "Properties of Polymers" by D.W. van Krevelen, Elsevier, Amsterdam, 1990, third revised edition, chapter 7, pages 189-199) for calculating the solubility parameters ($\delta_i$ in $J^{1/2}/cm^{3/2}$) for each of the substances, i.e. the binder and the diluent. Thereafter, the difference between these parameters can be established (i.e. $\delta_1 - \delta_2$), which difference is multiplied by itself to obtain the square of it. This figure is given in the third column of table 1. Alternatively, as is commonly known in the art, the solubility parameters can be actually measured for example as described in the "Polymer Handbook", chapter seven, fourth edition, volume 2, by Brandrup, Immergut and Grulke, published by John Wiley & Sons, Hoboken, New Jersey in 1999.

The first ink is an ink comprising the relative polar resin Cellolyn 21 E (a phthalate ester of hydroabietyl alcohol, available from Eastman Chemical, Kingsport Tennesee) as a binder and the a-polar Polywax 725 (polyethylene wax available from Baker Petrolite, Sugar Land Texas, melting temperature approx. 104°C) as a diluent. The second, third and fourth ink also comprise Cellolyn 21 E as a binder. The diluent for these inks is Polywax 850 (polyethylene wax available from Baker Petrolite, melting temperature approx. 107°C), Ester B-U and Astorstat wax 95 (available from Honeywell International, melting temperature approx. 101°C) respectively. Ester B-U is an ester of behenic acid (n-docosanoate) and Unilin 700, a fatty acid alcohol available from Baker Petrolite. This ester has a melting temperature of about 100°C. Ink number 5 contains the binder IPDI, which is the reaction product of isophorone diisocyanate with a mixture of 2-butanol and 3-methyl-2-butonol (2 moles of the diisocyate and 1 mole of each of the alcohols; leads to a binder with a glass transition temperature of approx. 18°C). The diluent is Risebran wax (available from Koster Keunen Holland, melting temperature approx. 86°C). Ink number 6 contains the binder IPDI and diluent Ester B-U, both as mentioned hereabove. Ink number 7 to 9 are based on Cellolyn 21 E as a binder. The diluents are Behenamide, Stearamide and Paracin 220 (N-(2-hydroxyethyl)-12-hydroxystearamide; available from CasChem Inc. a Cambrex company, melting temperature approx. 105°C) respectively. Ink number 10 comprises pentaerythritol-tetrabenzoate (PTB) as a binder (disclosed in table 1 of US 6,071,986 as substance II) and Stearamide as a crystalline diluent. Inks 11 and 12 are also based on Cellolyn 21 E. Ink number 11 comprises K1 as a diluent. K1 is the reaction products of behenyl-diketene and octadecylamine and has a melting temperature of approximately 102°C. Ink number 12 comprises K2 as a diluent. K2 is the reaction product of 2-naftol and 3-chloro-1,2-propanediol and has a melting temperature of approximately 121°C. Inks number 13 and 14 are known from US 6,923,853 (inks number 1 and 3 of table 2 of this US patent respectively). For ink number 14 two figures are given in column 3. The first figure (i.e. "4 $J/cm^3$") is the value for the square of the difference in solubility parameters between the crystalline thickener of this ink and the binder Uratak. The second value (i.e. "1 $J/cm^3$") is the value for the square of the difference in solubility parameters between the crystalline thickener of this ink and the softener PETB.

Table 1. Pressure-transferable inks

| Ink number | Blend | $(\delta_1-\delta_2)^2$ [J/cm$^3$] |
|---|---|---|
| 1 | Cellolyn 21E/Polyethyleen wax 725 | 36 |
| 2 | Cellolyn 21E/Polyethyleen wax 850 | 36 |
| 3 | Cellolyn 21E/Ester B-U | 23 |
| 4 | Cellolyn 21E/Astorstat wax 95 | 35 |
| 5 | IPDI/Risebran wax | 46 |
| 6 | IPDI/Ester B-U | 44 |
| 7 | Cellolyn 21E/Beheneamide | 2 |
| 8 | Cellolyn 21E/Stearamide | 1 |
| 9 | Cellolyn 21E/Paricin 220 | 1 |
| 10 | PTB/Stearamide | 3 |
| 11 | Cellolyn 21E/K1 | 12 |
| 12 | Cellolyn 21E/K2 | 13 |
| 13 | Ink No 1 of table 2 in US 6,923,853 | 4 |
| 14 | Ink No 3 of table 2 in US 6,923,853 | 4 and 1 |

Inks number 1 to 6 are inks according to the present invention. Inks 7 to 14 are for comparison. What can be seen is that based on the same constituents (for example Cellolyn 21 E) inks can be made that meet or do not meet the demands of the present invention.

In is noted that for the above inks only the meltable fraction, or carrier fraction is given. It should be clear that for practical application dyes and/or pigments are often added to these inks, or other additives such as surfactants, anti-oxidants, UV stabilisers, etc.

## *Example 8*

In this example the maximum elongation strength of two pressure-transferable inks is given. This elongation strength is the maximum tear strength that can be applied to a volume of ink at its top limit temperature (the top limit temperature being the temperature as defined in this patent) before it splits. The value for the maximum tear strength depends on the type of measuring apparatus, chosen measuring temperature, the used tools, the shape and size of the ink volume, the measuring speed etc.

However, by keeping all the variables the same for each ink to be measured, and measuring the force in Newton just before a volume of inks splits (i.e. when cohesive failure takes place), one can use the determined values for comparison purposes. In table 2, the maximum tear strength is given for ink number 3 of table 1 (an ink according to the invention) and ink number 9 (comparison ink).

Table 2. Maximum tear strength of pressure-transferable inks

| Ink number | Tear strength [N] |
|---|---|
| 3 | 6.0 |
| 9 | 5.0 |

It is clear that ink number 3 has a higher maximum tear strength. Hence, it is believed that this ink is more resistant against splitting and thus will give rise to higher transfer efficiency.

## Claims

**1.** A meltable ink which is solid at room temperature and liquid at a higher temperature, which ink is suitable for use in an indirect printing process, in which printing process the ink is provided, by the use of an inkjet printhead, in the form of individual ink drops to a transfer element, whereafter the ink is transferred to a receiving material by bringing the transfer element into contact with said receiving material under pressure, said ink comprising an amorphous binder and at least 20 mass percent, based on the total weight of the ink, of a crystalline diluent such that the ink is pressure-transferable at a temperature between a bottom limit and a top limit, the ink having a deformation energy of less than $20 \times 10^5$ Pa.s at a temperature equal to the top limit, **characterised in that** the square of the difference in solubility parameters of the binder and the diluent is more than 20 J/cm$^3$.

2. A meltable ink according to claim 1, **characterised in that** the square is between 35 and 100 J/cm$^3$.

3. A meltable ink according to any one of the preceding claims, **characterised in that** the glass transition temperature of the binder is below 30°C and the crystalline diluent is present in an amount between 40 and 60 mass percent, based on the total weight of the ink.

4. A method of selecting a meltable ink which is solid at room temperature, suitable for use in an indirect printing process, in which printing process the ink is provided, by the use of an inkjet printhead, to a transfer element, whereafter the ink is transferred under pressure from the transfer element to a receiving material, which ink comprises an amorphous binder and at least 20 mass percent, based on the total weight of the ink, of a crystalline diluent such that said ink is pressure-transferable at a temperature between a bottom limit and a top limit, the method comprising:

    - determining whether the ink is pressure-transferable, and if yes
    - determining the top limit,
    - determining whether a deformation energy of the ink at the said top limit is less than $20 \times 10^5$ Pa.s, and if yes,
    - determining the square of the difference in solubility parameters of the binder and the diluent,
    - selecting the ink if the difference is more than 20 J/cm$^3$, preferably between 35 and 100 J/cm$^3$.

5. A method according to claim 4, **characterised in that** the ink is selected if the glass transition temperature of the binder is below 30°C and the crystalline diluent is present in an amount between 40 and 60 mass percent, based on the weight of the ink.

6. A method of printing a receiving material with a meltable ink according to any of the claims 1 to 3, comprising providing the ink, by the use of an inkjet printhead, in the form of individual ink drops to a transfer element, and transferring the ink to a receiving material by bringing the transfer element into contact with said receiving material under pressure.

FIG.1

FIG. 2

FIG. 3

FIG. 4

FIG. 5

**European Patent Office**

**PARTIAL EUROPEAN SEARCH REPORT**   Application Number

which under Rule 45 of the European Patent Convention EP 07 10 1083
shall be considered, for the purposes of subsequent
proceedings, as the European search report

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 712 601 A (XEROX CORP [US]) 18 October 2006 (2006-10-18) * page 8, line 4 - line 12 * * page 9, line 31 - line 45 * * paragraph [0041] * * example 3 * ----- | 1-6 | INV. C09D11/00 |
| X | US 2006/004123 A1 (WU BO [US] ET AL) 5 January 2006 (2006-01-05) * claims 1,6,8,25,26 * * paragraph [0052] * ----- | 1-6 | |
| D,A | EP 1 378 551 A (OCE TECH BV [NL]) 7 January 2004 (2004-01-07) * claims 1-9 * ----- | 1-6 | |
| D,A | BRANDUP J. ET AL (EDS.): "Polymer Handbook, Chapter VII" 1999, WILEY & SONS , NEW YORK , XP002439625 * page 675 - page 688 * ----- | 1 | |

TECHNICAL FIELDS SEARCHED (IPC)

C09D

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| The Hague | 28 June 2007 | MATTHIJSSEN, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C07)

**European Patent Office**

INCOMPLETE SEARCH
SHEET C

Application Number

EP 07 10 1083

Claim(s) searched incompletely:
    1-6

Reason for the limitation of the search:

In order to carry out the invention within the whole claimed area, i.e. outside the scope of the examples, the skilled person would have to determine what possible compounds the amorphous binder and the crystalline diluent encompass. The first is only defined by having a Tg and the latter only by having a crystalline melting point. This implies that at least the binder is polymeric. The skilled person intending to solve the problem of the present application will have to select the amorphous binder form any amorphous polymeric compound and the crystalline diluent from any crystalline compound when formulating the ink. It is only through abundant trail and error cycles that the skilled person might possibly arrive at the inventive ink composition, whereby it is questionable if the skilled person would find any ink other than the inks of the examples.

This extremely broad definition of an ink does not allow the skilled person, to carry out the invention within the whole area that is claimed, without undue burden, i.e. by routine testing, and without needing inventive skill, in order to arrive at an ink having the properties as stated in claim 1.
Therefore, the present invention is not sufficiently disclosed (Article 83 EPC).

**ANNEX TO THE EUROPEAN SEARCH REPORT
ON EUROPEAN PATENT APPLICATION NO.**

EP 07 10 1083

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2007

| Patent document cited in search report | | Publication date | Patent family member(s) | Publication date |
|---|---|---|---|---|
| EP 1712601 | A | 18-10-2006 | NONE | |
| US 2006004123 | A1 | 05-01-2006 | NONE | |
| EP 1378551 | A | 07-01-2004 | JP 2004035884 A<br>NL 1021011 C2<br>US 2004021754 A1 | 05-02-2004<br>06-01-2004<br>05-02-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6923853 B
- US 6097921 A
- US 5372852 A
- US 6071986 A

**Non-patent literature cited in the description**

- Determination of the glass transition. Mechanical Properties and Testing of Polymers, An A-Z Reference. Kluwer Academic Publishers, 1999, 110
- *Journal of Imaging Science and Technology,* September 1996, vol. 40 (5), 386-389
- **D.W. VAN KREVELEN.** Properties of Polymers. Elsevier, 1990, 189-199
- **BRANDRUP ; LMMERGUT ; GRULKE.** Polymer Handbook. John Wiley & Sons, 1999, vol. 2